# EUROPÄISCHE PATENTSCHRIFT

(11) **EP 2 400 089 B1**
(45) Veröffentlichungstag und Bekanntmachung des Hinweises auf die Patenterteilung: **14.12.2016**
(21) Anmeldenummer: 11005220.6
(22) Anmeldetag: 27.06.2011
(51) Int. Cl.: E05B 67/36, E05B 71/00

(54) **Schlaufenschloss**
Loop lock
Verrou à boucle

(30) Priorität: 28.06.2010 DE 102010025383
(43) Veröffentlichungstag der Anmeldung: 28.12.2011
(73) Patentinhaber: ABUS August Bremicker Söhne KG, 58300 Wetter-Volmarstein (DE)
(72) Erfinder:
(74) Vertreter: Manitz, Finsterwald & Partner GbR

(56) Entgegenhaltungen:
- EP-B1- 0 785 328
- DE-A1- 19 714 013
- JP-A- H 108 807
- US-A- 4 347 720

## Beschreibung

Die Erfindung betrifft ein Schlaufenschloss, insbesondere ein Ketten- oder Drahtseilschloss, gemäß dem Oberbegriff des Anspruchs 1.

Ein derartiges Schlaufenschloss dient dazu, ein Fahrzeug (z.B. Fahrrad, Motorrad) bewegungsunfähig zu machen (z.B. durch Blockieren eines Rads) und/oder an einem Objekt (z.B. Laternenmast) zu sichern. Hierfür besitzt das Schloss einen Schlosskörper und eine flexible Schlaufe, die von dem befugten Benutzer wahlweise von dem Schlosskörper gelöst werden kann (z.B. um einen Teil des Fahrzeugs zu umgreifen) oder an dem Schlosskörper verriegelt werden kann (um das Fahrzeug abzusperren oder an einem Objekt zu sichern).

An dem Schlosskörper ist eine Klobenaufnahme mit einer Verriegelungshülse vorgesehen, die um eine Hauptachse des Schlosskörpers drehbar ist, und zwar zwischen einer Verriegelungsstellung und einer Freigabestellung. Die Verriegelungshülse besitzt mehrere umfänglich verteilt angeordnete Kugelaufnahmeöffnungen, in denen eine jeweilige Verriegelungskugel gelagert ist. In der Verriegelungsstellung der Verriegelungshülse sind die Verriegelungskugeln nach radial innen gedrängt, während in einer Freigabestellung der Verriegelungshülse die Verriegelungskugeln nach radial außen freigegeben sind.

Die Schlaufe weist an einem ersten Ende einen Kloben auf, der koaxial zu der Hauptachse des Schlosskörpers in die Klobenaufnahme des Schlosskörpers eingeführt werden kann. In dieser Stellung kann der Kloben in der Klobenaufnahme verriegelt werden, nämlich indem die Verriegelungshülse in die Verriegelungsstellung gedreht wird und die Verriegelungskugeln hierdurch nach radial innen gedrängt werden und mit dem Kloben zusammenwirken, beispielsweise durch Eingreifen in eine Ringnut des Klobens. Hierdurch ist eine besonders sichere Verriegelung gewährleistet, wobei der Kloben in der Klobenaufnahme um die Hauptachse drehbar ist, um die Form der Schlaufe leicht an die Gegebenheiten des Fahrzeugs anpassen zu können. Ein zweites Ende der Schlaufe ist an einem Befestigungsabschnitt des Schlosskörpers dauerhaft befestigt. Das zweite Ende der Schlaufe ist im Wesentlichen koaxial zu der Hauptachse des Schlosskörpers und somit im Wesentlichen koaxial zu dem ersten Ende der Schlaufe ausgerichtet, wenn der Kloben in die Verriegelungshülse der Klobenaufnahme eingeführt ist.

Eine im Wesentlichen koaxiale Ausrichtung der beiden Schlaufenenden im verriegelten Zustand des Schlosses bedeutet, dass das erste Ende und das zweite Ende der Schlaufe allenfalls geringfügig parallel versetzt zueinander angeordnet sind und/oder eine allenfalls geringfügige Winkelabweichung zwischen der Ausrichtung des ersten Endes und der Ausrichtung des zweiten Endes besteht. Somit schließen sich die beiden Enden der Schlaufe an zwei einander axial gegenüberliegende Enden des Schlosskörpers an, d.h. jeweils in Verlängerung entlang der Hauptachse des Schlosskörpers. Hierdurch bildet der Schlosskörper gemeinsam mit den beiden Schlaufenenden eine Längsform, die (beispielsweise im Gegensatz zu einer rechtwinkligen Ausrichtung der beiden Schlaufenenden am Schlosskörper) die Ausbildung einer durchgehenden Ovalform oder Kreisform der geschlossenen Schlaufe ermöglicht. Dies ist insbesondere dann wichtig, wenn die Schlaufe ein Objekt mit einem vergleichsweise großen Durchmesser umgreifen soll, wie dies beispielsweise zum Sichern von Motorrädern erwünscht sein kann.

Bei einem derartigen Schlaufenschloss ist es ferner von Vorteil, wenn der Schlosskörper einen Schließzylinder aufweist, der bezüglich der Hauptachse des Schlosskörpers zwischen der Klobenaufnahme (für das erste Ende der Schlaufe) und dem Befestigungsabschnitt (für das zweite Ende der Schlaufe) angeordnet ist, wobei der Schließzylinder einen Zylinderkern aufweist, der um eine senkrecht zu der Hauptachse ausgerichtete Zylinderachse drehbar ist. Mit anderen Worten ist der typischerweise länglich ausgebildete Schließzylinder senkrecht zu der Hauptachse des Schlosskörpers ausgerichtet, wodurch eine besonders geringe Baulänge des Schlosskörpers entlang der Hauptachse erreicht wird.

Aus der EP 0 785 328 B1 ist ein Schlaufenschloss gemäß dem Oberbegriff des Anspruchs 1 bekannt. Fig. 1b dieser Druckschrift zeigt den vorstehend erläuterten Vorteil dieses Schlosstyps, nämlich die Möglichkeit, mittels der geschlossenen Schlaufe eine durchgehende Ovalform oder Kreisform zu bilden, ohne dass der Schlosskörper eine derartige Formgebung wesentlich unterbricht.

Allerdings ist das aus der EP 0 785 328 B1 bekannte Schlaufenschloss mit Nachteilen behaftet. Bei diesem Schloss wird durch Drehbetätigung des Schließzylinders ein Zwischenschließkörper um 90° gedreht, wodurch ein Schließhohlkörper (entsprechend der vorgenannten Verriegelungshülse) wahlweise blockiert oder für eine Drehbewegung freigegeben ist. Bei freigegebenem Schließhohlkörper muss dieser vom Benutzer mittels eines drehfest gekoppelten Griffrings relativ zu einem mit einem Drehhohlkörper drehfest gekoppelten Schlossaußenkörper verdreht werden, um den Kloben freizugeben. Hierdurch ist die Bedienung des Schlosses gemäß EP 0 785 328 B1 unerwünscht umständlich, da eine zweistufige Betätigung erforderlich ist (Schließzylinder, Griffring). Dies erfordert ein Umgreifen am Schlosskörper und eine genaue Kenntnis der Funktionsweise des Schlosses, da die ordnungsgemäße Bedienung sich dem Benutzer nicht unbedingt intuitiv erschließt. Ferner besteht die Gefahr, dass der freigegebene Kloben unbeabsichtigt aus dem Schlosskörper herausfällt und das Fahrzeug beschädigt, da der Benutzer ja mit beiden Händen am Schlosskörper angreifen muss, um die Verdrehung des Griffrings relativ zu dem Schlossaußenkörper zu bewirken.

Die Blockierstellung wird bei dem Schloss gemäß EP 0 785 328 B1 dadurch bewirkt, dass anstelle eines gekrümmten Profils ein im Wesentlichen ebenes Profil des genannten Zwischenschließkörpers in Anlage mit der Innenseite des hohlzylindrischen Drehhohlkörpers gebracht wird, so dass der Drehhohlkörper nicht mehr relativ zu dem Schließhohlkörper verdreht werden kann. Da jedoch das ebene Profil von dem gekrümmten Profil des Zwischenschließkörpers nur geringfügig abweicht, ist auch zu befürchten, das der Formschluss zwischen dem Zwischenschließkörper und dem Drehhohlkörper durch Aufbringen von hohen Drehmomenten aufgehoben werden kann und der Schließhohlkörper somit relativ zu dem Drehhohlkörper gewaltsam verdreht werden kann.

Es ist daher eine Aufgabe der Erfindung, ein Schlaufenschloss der genannten Art zu schaffen, das bei hoher Sicherheit des Verriegelungsmechanismus eine einfache Bedienung gestattet.

Diese Aufgabe wird durch ein Schlaufenschloss mit den Merkmalen des Anspruchs 1 gelöst, und insbesondere dadurch, dass zwischen dem Zylinderkern des Schließzylinders und der Verriegelungshülse eine Umlenkeinrichtung wirksam ist, die eine Drehbewegung des Zylinders (um die Zylinderachse) in eine Drehbewegung der Verriegelungshülse (um die Hauptachse des Schlosskörpers) umlenkt.

Die Umlenkeinrichtung bewirkt eine Zwangsführung der drehbaren Verriegelungshülse in Abhängigkeit von einer Drehbetätigung des Schließzylinders. Hierdurch gestaltet sich die Bedienung des Schlaufenschlosses besonders einfach, da der Benutzer lediglich mittels eines zugeordneten Schlüssels den Schließzylinder betätigen muss, um die Verriegelungshülse wahlweise in die Verriegelungsstellung oder die Freigabestellung zu bringen und hierdurch den Kloben wahlweise in der Klobenaufnahme zu verriegeln oder für eine Entnahme aus der Klobenaufnahme freizugeben. Es sind also keine zusätzlichen Drehbetätigungen erforderlich, wie dies aus der eingangs genannten Druckschrift EP 0 785 328 B1 bekannt ist. Ferner ist der durch den Schließzylinder, die Umlenkeinrichtung, die Verriegelungshülse und die Verriegelungskugeln gebildete Verriegelungsmechanismus des Schlaufenschlosses besonders sicher, da der Verriegelungsmechanismus mit Ausnahme einer Schlüsseleinführöffnung (für den Schließzylinder) und mit Ausnahme der genannten Klobenaufnahme von einem geschlossenen Schlossgehäuse umgeben und hierdurch geschützt sein kann.

Aufgrund der genannten Zwangsführung der Verriegelungshülse (bidirektionale antriebswirksame Kopplung mit dem Zylinderkern) kann die Verriegelungshülse auch nicht durch Manipulation oder gewaltsame Einwirkung von außen unbefugt aus der Verriegelungsstellung in die Freigabestellung gebracht werden (etwa durch gewaltsames Verdrehen zweier Teile des Schlosskörpers).

Gleichwohl besitzt das Schloss den bereits erläuterten Vorteil einer im Wesentlichen koaxialen Ausrichtung der beiden am Schlosskörper befestigten Schlaufenenden relativ zueinander und einer kompakten Bauform des Schlosskörpers entlang der Hauptachse.

Vorteilhafte Ausführungsformen der Erfindung sind nachfolgend und in den abhängigen Ansprüchen genannt.

Die Umlenkeinrichtung kann ein Umlenkelement aufweisen, das einen Mitnehmerabschnitt und einen Abtriebsabschnitt aufweist, wobei der Mitnehmerabschnitt des Umlenkelements mit einem Antriebsabschnitt des Zylinderkerns zusammenwirkt, und wobei der Abtriebsabschnitt des Umlenkelements mit einem Mitnehmerabschnitt der Verriegelungshülse zusammenwirkt. Somit muss die Umlenkeinrichtung lediglich ein einziges bewegliches zusätzliches Element umfassen, das unmittelbar mit dem drehbaren Zylinderkern und der drehbaren Verriegelungshülse gekoppelt ist. Beispielsweise können der Mitnehmerabschnitt des Umlenkelements und der Antriebsabschnitts des Zylinderkerns eine Führungsnut und einen in die Führungsnut eingreifenden Nocken umfassen, oder umgekehrt. Dementsprechend können der Abtriebsabschnitt des Umlenkelements und der Mitnehmerabschnitt der Verriegelungshülse eine Führungsnut und einen in die Führungsnut eingreifenden Nocken umfassen, oder umgekehrt.

Gemäß einer vorteilhaften Ausführungsform ist das genannte Umlenkelement in einer Normalebene zu der Zylinderachse beweglich gelagert. Beispielsweise kann das Umlenkelement bezüglich der Zylinderachse in axialer Verlängerung zu dem Zylinderkern angeordnet sein. Somit bewirkt die Umlenkeinrichtung keine unerwünschte Vergrößerung der Baulänge des Schlosskörpers entlang der Hauptachse.

Sofern an dem genannten Umlenkelement zwei Führungsnuten ausgebildet sind, in die ein Antriebsnocken des Zylinderkerns und ein Mitnehmernocken der Verriegelungshülse eingreifen, ergibt sich ein besonders einfacher Aufbau der Umlenkeinrichtung, da die beiden Nocken an dem Zylinderkern bzw. an der Verriegelungshülse angeformt sein können, ohne dass zusätzliche Bauelemente erforderlich sind.

Vorzugsweise ist das genannte Umlenkelement linear beweglich gelagert, wobei die beiden genannten Führungsnuten senkrecht zueinander verlaufen. Hierdurch ergibt sich eine besonders einfache Führung des beweglichen Umlenkelements (beispielsweise in Form einer Feder-Nut-Führung), und auch die Fertigung des Umlenkelements ist vorteilhaft einfach. Alternativ kann jedoch beispielsweise auch ein schwenkbares Umlenkelement vorgesehen sein.

Was die Lagerung der Verriegelungshülse in Drehrichtung betrifft, so kann die Verriegelungshülse über Teile ihrer im Querschnitt kreisrunden Umfangsfläche an einer Innenfläche eines Schlossgehäuses gleitgelagert sein. Hierbei ist es bevorzugt, wenn die Verriegelungshülse becherförmig ausgebildet ist und einen Bodenabschnitt aufweist, an dem eine koaxial zu der Hauptachse des Schlosskörpers ausgerichtete erste Lagereinrichtung ausgebildet ist, wobei die erste Lagereinrichtung mit einer zweiten Lagereinrichtung zusammenwirkt, die an einem Zylindergehäuse des Schließzylinders ausgebildet ist. Die erste Lagereinrichtung kann hierbei eine Lageröffnung und die zweite Lagereinrichtung einen in die Lageröffnung eingreifenden Lagerzapfen aufweisen oder umgekehrt. Hierdurch ist die Verriegelungshülse auf besonders einfache Weise bezüglich der Hauptachse zentriert und um die Hauptachse drehbar gelagert. Die beiden genannten Lagereinrichtungen können nämlich integral an der Verriegelungshülse bzw. an dem Zylindergehäuse ausgebildet sein. Die Verriegelungshülse kann somit auch unmittelbar an das Zylindergehäuse angrenzen, was wiederum zu einer vorteilhaft geringen Baulänge des Schlosskörpers entlang der Hauptachse beiträgt.

Gemäß einer bevorzugten Ausführungsform weist der Schlosskörper ein Schlossgehäuse auf, an dessen Innenseite Kugelausweichvertiefungen ausgebildet sind, die den Kugelaufnahmeöffnungen der Verriegelungshülse zugeordnet sind und in die die Verriegelungskugeln nach radial außen zurückweichen können, wenn die Verriegelungshülse in die Freigabestellung gedreht ist. Somit wirkt die Verriegelungshülse mit dem Schlossgehäuse zusammen, um in Abhängigkeit von der Drehstellung der Verriegelungshülse die Verriegelungskugeln nach radial innen zu drängen oder nach radial außen freizugeben, wobei das Schlossgehäuse zugleich weitere Komponenten des Schlosskörpers umschließen und bei verriegeltem Schloss den Kraftfluss leiten kann. Alternativ hierzu ist es jedoch beispielsweise auch möglich, dass die Verriegelungshülse mit einer drehfest angeordneten Führungshülse zusammenwirkt, an der die genannten Kugelausweichvertiefungen ausgebildet sind.

Weiterhin ist es bevorzugt, wenn der Schlosskörper auch einen Federring umfasst, der die drehbare Verriegelungshülse umfänglich umgibt und der mehrere rückfedernde Vorspannzungen aufweist, welche zumindest in der Freigabestellung der Verriegelungshülse die genannten Kugelaufnahmeöffnungen der Verriegelungshülse überdecken und hierdurch die Verriegelungskugeln nach radial innen vorspannen. Der Federring bewirkt somit eine Rastverbindung des Klobens der Schlaufe mit der Klobenaufnahme des Schlosskörpers, wenn der Kloben in die Klobenaufnahme eingeführt ist und die Verriegelungshülse sich in der Freigabestellung befindet. In diesem Zustand ist der Kloben also an dem Schlosskörper lösbar gehalten, da die federvorgespannten Verriegelungskugeln mit dem Kloben zusammenwirken, beispielsweise indem die Verriegelungskugeln in eine Ringnut des Klobens eingreifen. Dies vereinfacht die Handhabung des Schlosses erheblich, da z.B. bei einem Entriegeln des Schlosses durch entsprechende Drehbetätigung des Schließzylinders der Kloben nicht unbeabsichtigt aus der Klobenaufnahme herausfällt. Für das Verriegeln des Schlosses kann der Kloben zunächst in die Klobenaufnahme kraftschlüssig eingesetzt werden, bevor durch entsprechende Drehbetätigung des Schließzylinders der Kloben in dieser Stellung am Schlosskörper formschlüssig verriegelt wird. Der genannte Federring ist vorzugsweise als ein Stanz-Biege-Blechteil ausgebildet und kann somit sehr kostengünstig gefertigt werden. Bevorzugt ist der Federring umfänglich geschlossen und auf die Verriegelungshülse formschlüssig aufgesetzt und/oder in ein Gehäuse des Schlosskörpers formschlüssig eingesetzt.

Gemäß einer vorteilhaften Weiterbildung umfasst der Federring wenigstens eine Fixierzunge, die den Federring innerhalb des Schlosskörpers in einer drehfesten Anordnung fixiert. Hierbei sind die Vorspannzungen und die Fixierzunge bezüglich der Hauptachse des Schlosskörpers vorzugsweise achsparallel ausgerichtet, d.h. parallel versetzt zu der Hauptachse und parallel versetzt zueinander. Die Fixierzunge ist bezüglich der Vorspannzungen vorzugsweise radial versetzt angeordnet, insbesondere nach radial außen. Die Fixierzunge gewährleistet somit einen drehfesten Sitz des Federrings innerhalb des Schlosskörpers, um sicherzustellen, dass in der Freigabestellung der Verriegelungshülse die genannten Vorspannzungen des Federrings die zugeordneten Kugelaufnahmeöffnungen der Verriegelungshülse bestimmungsgemäß überdecken. Hierbei ist ein einfacher Aufbau des Federrings möglich, da sowohl die Vorspannzungen als auch die genannte wenigstens eine Fixierzunge an dem Federring integral (d.h. einteilig) ausgebildet sein können, beispielsweise durch zweifache Umbiegung.

Alternativ oder zusätzlich zu der genannten Fixierzunge kann der Federring wenigstens eine rückfedernde Rastzunge aufweisen, die mit wenigstens einer Rastvertiefung der Verriegelungshülse eine Rastverbindung bildet, wenn die Verriegelungshülse sich in der Verriegelungsstellung und/oder in der Freigabestellung befindet. Hierdurch kann nach einer Drehbewegung der Verriegelungshülse diese in ihrer jeweiligen Endstellung auf einfache Weise stabilisiert werden. Aufgrund der bereits erläuterten Zwangsführung zwischen dem drehbaren Zylinderkern des Schließzylinders und der drehbaren Verriegelungshülse ergibt sich somit auch eine Stabilisierung des Zylinderkerns in seinen beiden Endstellungen (Schließstellung und Öffnungsstellung). Zu diesem Zweck ist es lediglich erforderlich, an dem Federring eine Rastzunge vorzusehen, die als integraler Abschnitt des Federrings ausgebildet sein kann. Insbesondere kann die Rastzunge auch durch eine der Vorspannzungen oder durch die genannte Fixierzunge gebildet sein. Es ergibt sich also kein wesentlich erhöhter Herstellungsaufwand für den Federring. Sofern die erläuterte Stabilisierung der Verriegelungshülse für beide Endstellungen verwirklicht werden soll (Verriegelungsstellung und Freigabestellung), können zwei rückfedernde Rastzungen vorgesehen sein, die mit einer einzigen gemeinsamen Rastvertiefung der Verriegelungshülse zusammenwirken, oder an dem Federring ist eine einzige Rastzunge ausgebildet, die mit zwei separaten Rastvertiefungen der Verriegelungshülse zusammenwirkt.

Weiterhin ist es bevorzugt, wenn der Schlosskörper ein einteiliges Schlossgehäuse aufweist, in dem die drehbare Verriegelungshülse bezüglich der Hauptachse des Schlosskörpers in axialer Richtung gesichert ist und an dem zugleich der genannte Befestigungsabschnitt des Schlosskörpers (für das zweite Ende der Schlaufe) ausgebildet ist. Hierdurch kann das Schlossgehäuse den Kraftfluss zwischen dem ersten Ende und dem zweiten Ende der Schlaufe führen, wenn das erste Ende der Schlaufe mittels des Klobens an dem Schlosskörper verriegelt ist und wenn auf die geschlossene Schlaufe eine Kraft in Umfangsrichtung ausgeübt wird, insbesondere im Falle eines Aufbruchsversuchs.

Bezüglich des vorstehend erläuterten Federrings bezieht sich die Erfindung generell auch auf ein Klobenschloss, das einen Schlosskörper und einen am Schlosskörper verriegelbaren Kloben aufweist, wobei der Schlosskörper eine Klobenaufnahme mit einer Verriegelungshülse aufweist, die zwischen einer Verriegelungsstellung und einer Freigabestellung drehbar ist und die mehrere umfänglich verteilt angeordnete Kugelaufnahmeöffnungen aufweist, in denen eine jeweilige Verriegelungskugel gelagert ist, wobei die Verriegelungskugeln in der Verriegelungsstellung nach radial innen gedrängt und in der Freigabestellung nach radial außen freigegeben sind, wobei der Schlosskörper ferner einen Schließzylinder mit einem drehbaren Zylinderkern aufweist, der mit der Verriegelungshülse antriebswirksam gekoppelt ist, um die Verriegelungshülse wahlweise in die Verriegelungsstellung oder in die Freigabestellung zu drehen, wobei der Schlosskörper ferner einen Federring umfasst, der die Verriegelungshülse umfänglich umgibt und der mehrere rückfedernde Vorspannzungen aufweist, die zumindest in der Freigabestellung der Verriegelungshülse die Kugelaufnahmeöffnungen der Verriegelungshülse überdecken und hierdurch die Verriegelungskugeln nach radial innen vorspannen, und wobei der Kloben in die Klobenaufnahme des Schlosskörpers einführbar ist und dort mittels der Verriegelungskugeln verriegelbar ist.

Bei einem derartigen Klobenschloss bewirkt der Federring eine Rastverbindung des Klobens mit der Klobenaufnahme des Schlosskörpers, wenn der Kloben in die Klobenaufnahme eingeführt ist und die Verriegelungshülse sich in der Freigabestellung befindet. Die vorstehend bereits im Einzelnen erläuterten Vorteile, Ausführungsformen und Weiterbildungen des Schlaufenschlosses mit Federring sind auch auf das genannte Klobenschloss übertragbar. Insbesondere kann der Kloben eine Ringnut aufweisen, in die die Verriegelungskugeln eingreifen. Der Federring kann wenigstens eine Fixierzungen aufweisen, die den Federring innerhalb des Schlosskörpers in einer drehfesten Anordnung fixiert. Vorzugsweise ist der Federring innerhalb des Schlosskörpers drehfest angeordnet, wobei der Federring wenigstens eine rückfedernde Rastzunge aufweist, die mit wenigstens einer Rastvertiefung der Verriegelungshülse eine Rastverbindung bildet, wenn die Verriegelungshülse sich in der Verriegelungsstellung und/oder in der Freigabestellung befindet.

Die Erfindung wird nachfolgend lediglich beispielhaft unter Bezugnahme auf die Zeichnungen erläutert.
- Fig. 1: zeigt eine Perspektivansicht eines Schlaufenschlosses, wobei lediglich die Endabschnitte der Schlaufe gezeigt sind.
- Fig. 2: zeigt eine Explosionsansicht von Teilen des Schlaufenschlosses.
- Fig. 3 und 4: zeigen unterschiedliche Perspektivansichten von Teilen eines Verriegelungsmechanismus des Schlaufenschlosses.
- Fig. 5 und 6: zeigen unterschiedliche Explosionsansichten von Teilen des Verriegelungsmechanismus.
- Fig. 7: zeigt eine Perspektivansicht eines Zylindergehäuses.
- Fig. 8 und 9: zeigen eine Stirnseitenansicht bzw. eine Perspektivansicht eines Schlossgehäuses.
- Fig. 10: zeigt eine Perspektivansicht eines Federrings.

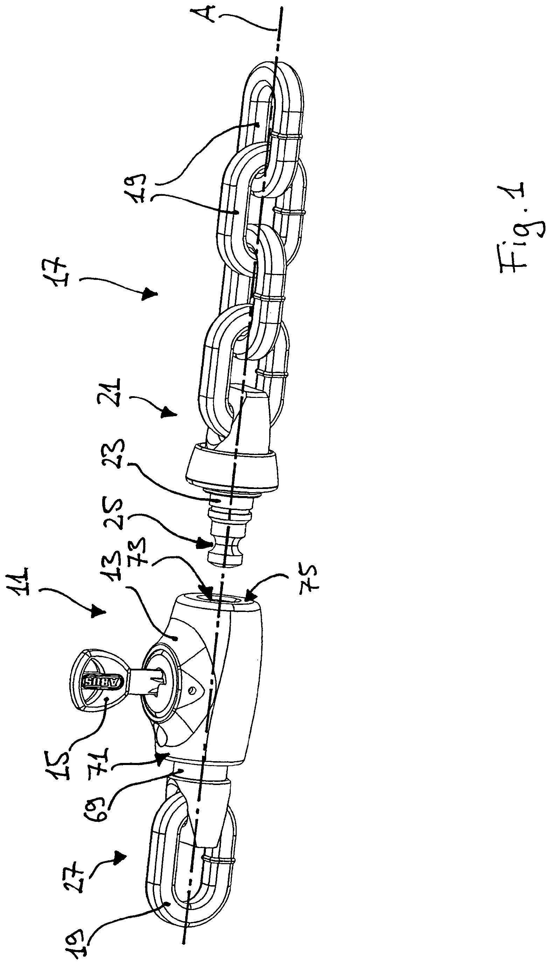

Das in Fig. 1 gezeigte Schlaufenschloss besitzt einen Schlosskörper 11, der ein Schlossgehäuse 13 aufweist und dem ein Schlüssel 15 zugeordnet ist. Das Schlaufenschloss besitzt ferner eine Schlaufe 17, die bei dem hier gezeigten Ausführungsbeispiel als Kette mit mehreren Kettengliedern 19 ausgebildet ist. An einem ersten Ende 21 der Schlaufe 17 ist ein Kloben 23 befestigt, der an seiner Spitze eine umfängliche Ringnut 25 aufweist. Ein zweites Ende 27 der Schlaufe 17 ist an dem Schlosskörper 11 dauerhaft befestigt. Die Schlaufe 17 ist unvollständig dargestellt. Tatsächlich erstreckt sich die Schlaufe 17 mit einer entsprechenden Anzahl von Kettengliedern 19 durchgehend von dem ersten Ende 21 zu dem zweiten Ende 27. Aus Fig. 1 ist ersichtlich, dass das erste Ende 21 und das zweite Ende 27 der Schlaufe 17 bezüglich einer Hauptachse A des Schlosskörpers 11 koaxial ausgerichtet sind, wenn der Kloben 23 in den Schlosskörper 11 eingeführt wird. An dem Schlosskörper 11 und an der Schlaufe 17 können noch Verkleidungen oder Schutzüberzüge vorgesehen sein, insbesondere aus Kunststoff. Anstelle einer Kette kann die Schlaufe 17 beispielsweise auch als Drahtseil ausgebildet sein, insbesondere mit einer flexiblen Umhüllung in Form von ineinander greifenden Metallhülsen (so genanntes Panzerkabel).

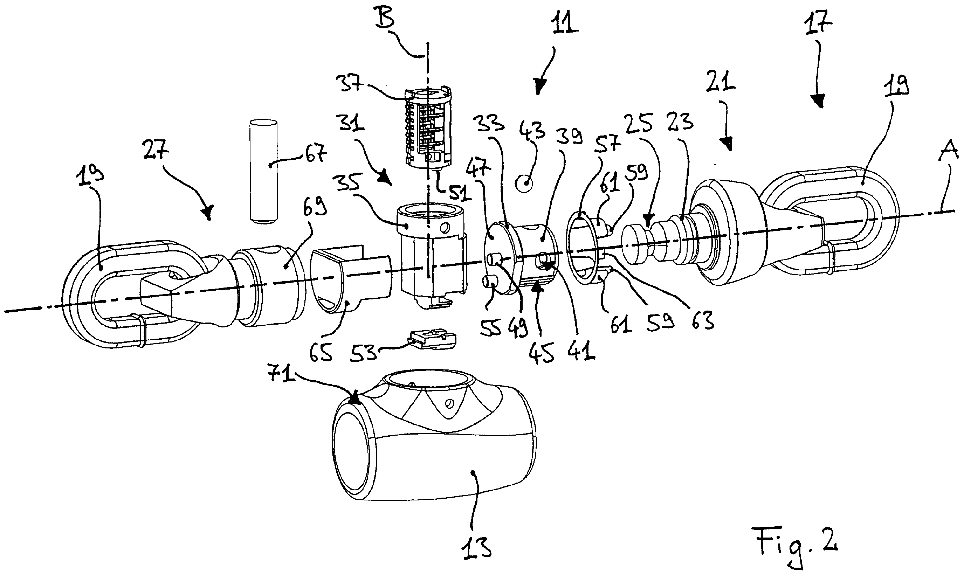

Fig. 2 zeigt Einzelheiten des Schlaufenschlosses gemäß Fig. 1. Ein Verriegelungsmechanismus des Schlaufenschlosses umfasst einen Schließzylinder 31 und eine um die Hauptachse A drehbare Verriegelungshülse 33. Der Schließzylinder 31 umfasst ein Zylindergehäuse 35, in dem ein Zylinderkern 37 um eine Zylinderachse B drehbar gelagert ist. Die Verriegelungshülse 33 besitzt eine Mantelfläche 39, an der vier umfänglich verteilt angeordnete Kugelaufnahmeöffnungen 41 ausgebildet sind, die zum Aufnehmen einer jeweiligen Verriegelungskugel 43 dienen. In Fig. 2 ist lediglich eine einzige Verriegelungskugel 43 dargestellt. An der Mantelfläche 39 ist ferner eine parallel zu der Hauptachse A verlaufende Rastvertiefung 45 ausgebildet. Ferner besitzt die Verriegelungshülse 33 an der dem Zylindergehäuse 35 zugewandten Stirnseite einen geschlossenen Bodenabschnitt 47, an dem koaxial zu der Hauptachse A des Schlosskörpers 11 ein Lagerzapfen 49 ausgebildet ist.

Der Verriegelungsmechanismus des Schlaufenschlosses weist ferner eine Umlenkeinrichtung auf. Diese umfasst einen Antriebsnocken 51, der an der unteren Stirnseite des drehbaren Zylinderkerns 37 in einer exzentrischen Anordnung bezüglich der Zylinderachse B ausgebildet ist. Die Umlenkeinrichtung umfasst ferner ein Umlenkelement 53, das an der unteren Stirnseite des Zylindergehäuses 35 innerhalb einer Normalebene zu der Zylinderachse B linear beweglich gelagert ist, und einen Mitnehmernocken 55, der an dem Bodenabschnitt 47 der Verriegelungshülse 33 in einer exzentrischen Anordnung bezüglich der Hauptachse A ausgebildet ist.

In Fig. 2 ist außerdem ein Federring 57 gezeigt, an dem in einer radial inneren Position vier rückfedernde Vorspannzungen 59 ausgebildet sind, deren umfängliche Verteilung jener der Kugelaufnahmeöffnungen 41 der Verriegelungshülse 33 entspricht. An dem Federring 57 sind ferner in einer radial äußeren Position vier Fixierzungen 61 ausgebildet, die in radialer Verlängerung zu den Vorspannzungen 59 angeordnet sind. Außerdem ist an dem Federring 57 in einer radial inneren Position eine rückfedernde Rastzunge 63 ausgebildet, die bezüglich der Umfangsrichtung zwischen zwei Vorspannzungen 59 angeordnet ist.

Ferner ist in Fig. 2 ein Innengehäuse 65 gezeigt, das im Wesentlichen zur Fixierung des Zylindergehäuses 35 dient. Weiterhin ist ein Sicherungsbolzen 67 gezeigt. Mittels des Sicherungsbolzens 67 kann ein an dem zweiten Ende 27 der Schlaufe 17 vorgesehenes Anschlussteil 69 an einem Befestigungsabschnitt 71 des Schlosskörpers 11 dauerhaft befestigt werden, wodurch zugleich eine axiale Zugangsöffnung des Schlossgehäuses 13 (für die Montage der verschiedenen Komponenten des Schlosskörpers 11) verschlossen wird.

Bei dem in Fig. 1 und 2 gezeigten Schlaufenschloss kann der Kloben 23 entlang der Hauptachse A in eine Klobenaufnahme 73 des Schlossgehäuses 13 eingeführt werden, die die Verriegelungshülse 33 umfänglich umschließt und durch einen Sicherungsbund 75 begrenzt ist. Durch das Einführen des Klobens 23 in die Klobenaufnahme 73 wird die Schlaufe 17 geschlossen. In diesem Zustand kann das erste Ende 21 der Schlaufe 17 an dem Schlosskörper 11 verriegelt werden. Hierfür wird der Schließzylinder 31 mittels des Schlüssels 15 in einer Schließrichtung drehbetätigt. Die hierdurch bewirkte exzentrische Drehbewegung des Antriebsnockens 51 des Zylinderkerns 37 um die Zylinderachse B wird mittels des Umlenkelements 53 über den Mitnehmernocken 55 in eine Drehbewegung der Verriegelungshülse 33 um die Hauptachse A umgesetzt. Die Verriegelungshülse 33 wird somit von einer Freigabestellung in eine Verriegelungsstellung gedreht, wodurch die Verriegelungskugeln 43 nach radial innen gedrängt werden und in die Ringnut 25 des Klobens 23 eingreifen. Der Kolben 23 ist somit gegen eine Entnahme aus der Klobenaufnahme 73 des Schlosskörpers 11 gesichert. Durch eine Drehbetätigung des Zylinderschlosses 31 in Öffnungsrichtung wird die Verriegelungshülse 33 im umgekehrten Drehsinn gedreht, also von der Verriegelungsstellung in die Freigabestellung. Hierdurch werden die Verriegelungskugeln 43 nach radial außen freigegeben, wodurch der Kloben 23 wieder von dem Schlosskörper 11 gelöst werden kann, um die Schlaufe 17 zu öffnen.

Das in den Fig. 1 und 2 gezeigte Schlaufenschloss zeichnet sich durch eine koaxiale Ausrichtung der beiden Schlaufenenden 21, 27 aus, wodurch die Schlaufe 17 zu einer gleichmäßig abgerundeten Form geschlossen werden kann, beispielsweise zu einer Ovalform oder einer Kreisform. Hierdurch lässt sich die Länge der Schlaufe 17 besonders gut ausnutzen, insbesondere im Vergleich zu einer rechtwinkligen Ausrichtung der beiden Schlaufenenden 21, 27 relativ zueinander. Hierbei ist es von besonderem Vorteil, dass der Schlosskörper 11 entlang der Hauptachse A eine geringe Baulänge besitzt. Dies ist insbesondere darauf zurückzuführen, dass der Schließzylinder 31 entlang der Hauptachse A zwischen der Klobenaufnahme 73 einerseits und dem Befestigungsabschnitt 71 für das Anschlussteil 69 andererseits angeordnet ist, und dass die Zylinderachse B des Schließzylinders 31 senkrecht zu der Hauptachse A des Schlosskörpers 11 ausgerichtet ist.

Das gezeigte Schlaufenschloss zeichnet sich ferner durch eine besonders einfache und intuitiv eingängliche Bedienung aus. Zwischen dem Schließzylinder 31 und der Verriegelungshülse 33 ist nämlich eine bidirektionale Zwangsführung vorgesehen, d.h. eine Drehbetätigung des Schließzylinders 31 in Schließrichtung oder in Öffnungsrichtung bewirkt zwangsläufig eine Drehbewegung der Verriegelungshülse 33 in die Verriegelungsstellung bzw. in die Freigabestellung, um den Kloben 23 an dem Schlosskörper 11 zu verriegeln bzw. von diesem freizugeben. Der Benutzer muss also nicht zusätzliche Drehbetätigungen ausführen.

Ferner zeichnet sich das gezeigte Schlaufenschloss durch eine hohe Stabilität aus, da im Falle eines Aufbruchsversuchs eine auf den Kloben 23 des ersten Schlaufenendes 21 entlang der Hauptachse A ausgeübte Zugkraft über die Verriegelungskugeln 43 und die Verriegelungshülse 33 auf den die Klobenaufnahme 73 umgebenden Sicherungsbund 75 des Schlossgehäuses 13 übertragen wird. Die Kraft wird hierdurch entlang des Schlossgehäuses 13 über den Befestigungsabschnitt 71 und den Sicherungsbolzen 67 auf das Anschlussteil 69 des zweiten Schlaufenendes 27 geleitet. Somit wird die Kraft von dem ersten Schlaufenende 21 über das einteilig ausgebildete Schlossgehäuse 13 auf das zweite Schlaufenende 27 übertragen, ohne dass hierdurch eine Belastung des Schließzylinders 31 oder des Umlenkelements 53 erfolgt.

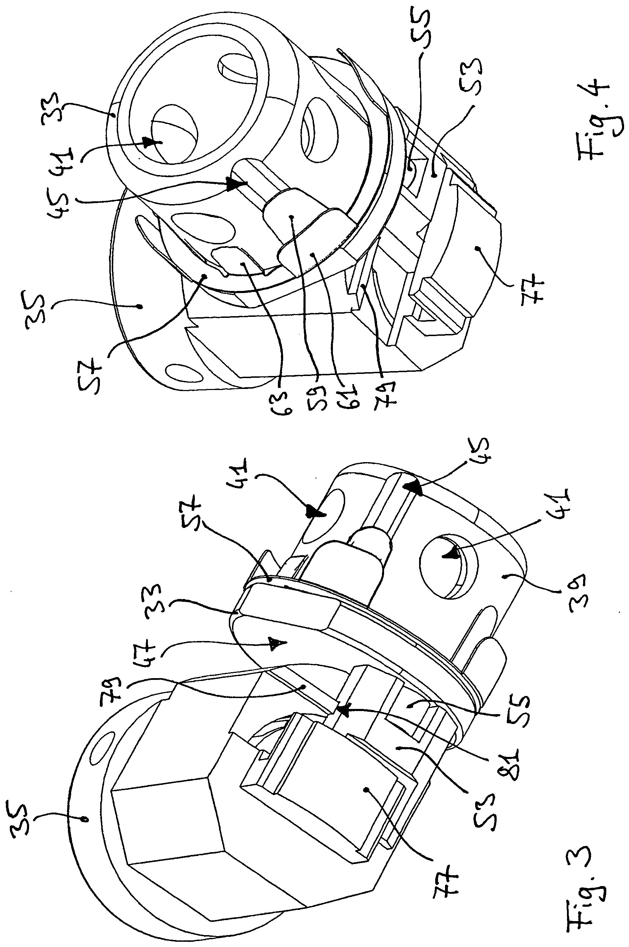

Nachfolgend wird unter Bezugnahme auf die Fig. 3 bis 7 der Verriegelungsmechanismus des Schlaufenschlosses gemäß Fig. 1 und 2 näher erläutert.

Fig. 3 und 4 zeigen das Zylindergehäuse 35, das Umlenkelement 53, die Verriegelungshülse 33 und den Federring 57 in einer jeweiligen Perspektivansicht, und zwar im montierten Zustand in der Verriegelungsstellung. Das Zylindergehäuse 35 besitzt an seiner unteren Stirnseite einen angeformten Klammerabschnitt 77, der das Umlenkelement 53 umgreift und innerhalb einer Normalebene zu der Zylinderachse B sowie senkrecht zu der Hauptachse A (Fig. 2) linear beweglich lagert. Ferner ist an der unteren Stirnseite des Zylindergehäuses 35 ein Lagersteg 79 angeformt, der in eine Lagernut 81 des Umlenkelements 53 eingreift.

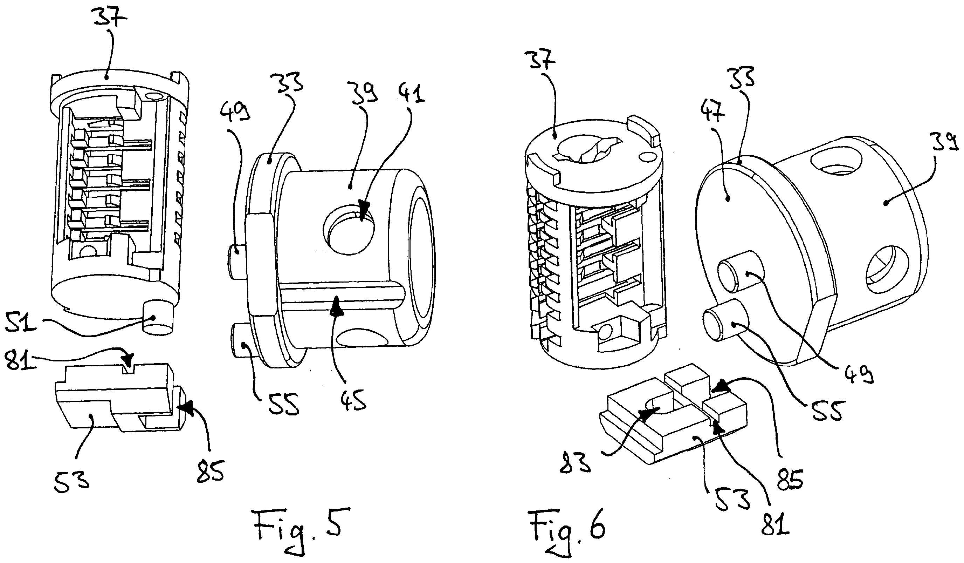

Fig. 5 und 6 zeigen den Zylinderkern 37, das Umlenkelement 53 und die Verriegelungshülse 33 in einer jeweiligen Explosionsansicht. Der Zylinderkern 37 besitzt an einer unteren Stirnseite den exzentrisch angeordneten Antriebsnocken 51. Der Antriebsnocken 51 greift in eine parallel zu der Hauptachse A (Fig. 2) verlaufende erste Führungsnut 83 des Umlenkelements 53 ein (Fig. 6). Das Umlenkelement 53 besitzt ferner eine zweite Führungsnut 85 (Fig. 5 und 6), die senkrecht zu der ersten Führungsnut 83 und parallel zu der Zylinderachse B (Fig. 2) verläuft. In die zweite Führungsnut 85 greift der exzentrische Mitnehmernocken 55 der Verriegelungshülse 33 ein. In Fig. 5 und 6 ist ferner der bereits genannte, zu der Hauptachse A (Fig. 2) koaxiale Lagerzapfen 49 der Verriegelungshülse 33 gezeigt.

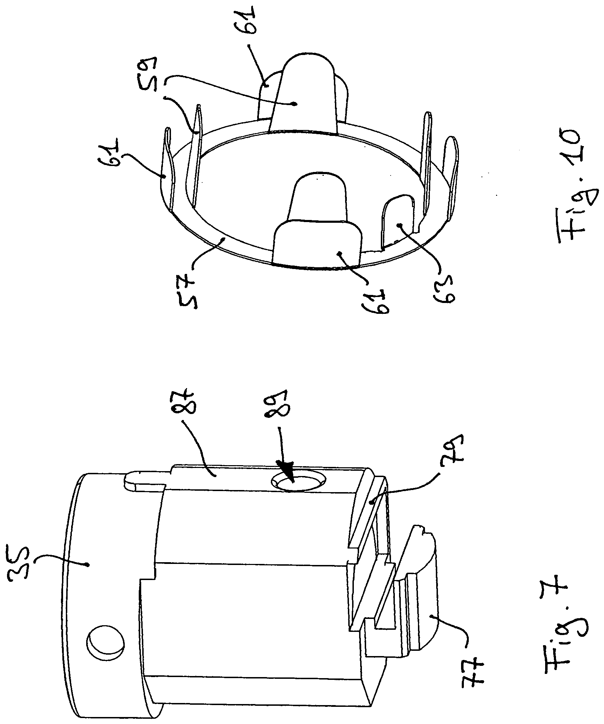

Fig. 7 zeigt das Zylindergehäuse 35 in einer Perspektivansicht. An einer der Verriegelungshülse 33 (Fig. 3 und 4) zugewandten Abflachung der Mantelfläche ist eine ebene Lagerfläche 87 mit einer Lageröffnung 89 ausgebildet. Im montierten Zustand des Schlosses greift der Lagerzapfen 49 der Verriegelungshülse 33 (Fig. 6) in die Lageröffnung 89 des Zylindergehäuses 35 ein.

Der Drehantrieb der Verriegelungshülse 33 um die Hauptachse A geschieht folgendermaßen: Durch Drehbetätigung des Schließzylinders 31 mittels des zugeordneten Schlüssels 15 (Fig. 1 und 2) wird der Antriebsnocken 51 des Zylinderkerns 37 um die Zylinderachse B (Fig. 2) gedreht. Aufgrund des Eingriffs des Antriebsnockens 51 in die erste Führungsnut 83 des Umlenkelements 53 (Fig. 5 und 6) wird das Umlenkelement 53 entsprechend der Erstreckungsrichtung der Lagernut 81 entlang der Unterseite des Zylindergehäuses linear versetzt. Hierdurch wird der in die zweite Führungsnut 85 eingreifende Mitnehmernocken 55 der Verriegelungshülse 33 seitlich versetzt und letztlich um die Hauptachse A des Schlosskörpers 11 (Fig. 2) gedreht. Je nach Drehsinn des Zylinderkerns 37 kann die Verriegelungshülse 33 somit zwischen der Verriegelungsstellung und der Freigabestellung gedreht werden.

Aufgrund des Eingriffs des Lagerzapfens 49 der Verriegelungshülse 33 (Fig. 6) in die Lageröffnung 89 des Zylindergehäuses 35 (Fig. 7) ist auf einfache Weise eine Zentrierung der drehbaren Verriegelungshülse 33 bezüglich der Hauptachse A realisiert. Aus den Fig. 3, 4 und 7 ist auch ersichtlich, dass der stirnseitige Bodenabschnitt 47 der Verriegelungshülse 33 unmittelbar an der Lagerfläche 87 des Zylindergehäuses 35 anliegt, so dass die Verriegelungshülse 33 in axialer Richtung an der Lagerfläche 87 gelagert ist. Diese Anordnung trägt ebenfalls zu einem vorteilhaft kompakten Aufbau des Schlosskörpers 11 entlang der Hauptachse A bei.

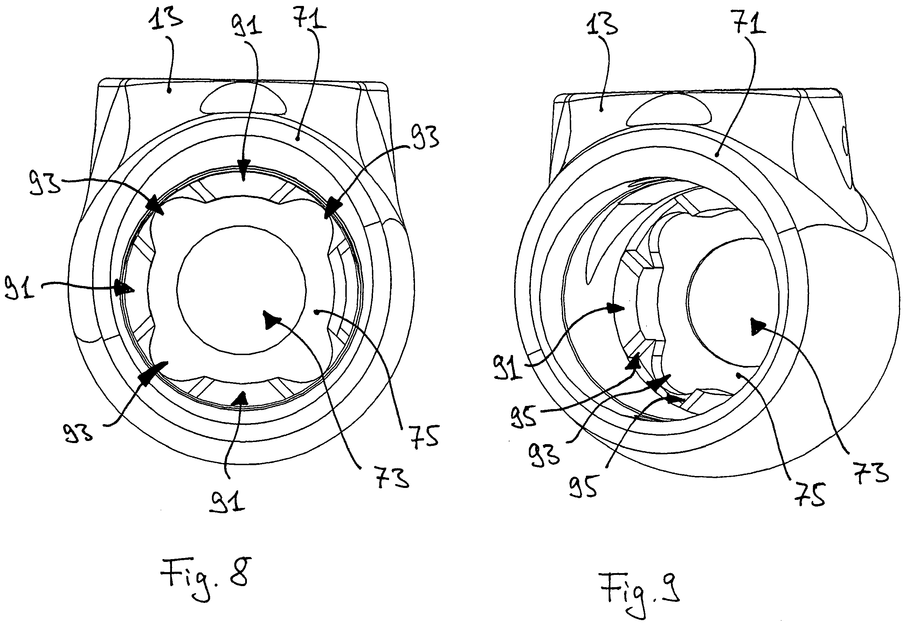

Nachfolgend wird unter zusätzlicher Bezugnahme auf die Fig. 8 und 9 erläutert, wie die Verdrehung der Verriegelungshülse 33 ein Verriegeln oder ein Freigeben des Klobens 23 an bzw. von dem Schlosskörper 11 (Fig. 1 und 2) bewirkt. Fig. 8 zeigt das Schlossgehäuse 13 in einer Stirnseitenansicht entlang der Hauptachse A, d.h. ausgehend von dem Befestigungsabschnitt 71 wird ein Blick in den Innenraum des Schlossgehäuses 13 freigegeben, so dass der am anderen Ende befindliche Sicherungsbund 75 zu erkennen ist, der die Klobenaufnahme 73 umfänglich begrenzt. Fig. 9 zeigt eine entsprechende Perspektivansicht. An der innenseitigen Mantelfläche des im Wesentlichen hohlzylindrischen Schlossgehäuses 13, und zwar unmittelbar angrenzend an die Innenseite des Sicherungsbunds 75, ist ein Verriegelungsring integral ausgebildet, der in einer alternierenden Anordnung vier Verriegelungsabschnitte 91 und vier Kugelausweichvertiefungen 93 aufweist. Die Kugelausweichvertiefungen 93 erstrecken sich bezüglich der Verriegelungsabschnitte 91 nach radial außen. In Fig. 9 ist zu erkennen, dass die Verriegelungsabschnitte 91 bezüglich der Hauptachse A (Fig. 2) axial verlängert sind, so dass im Bereich der Kugelausweichvertiefungen 93 (und zwar axial versetzt hierzu) Fixieranschläge 95 gebildet sind, die in Umfangsrichtung wirksam sind, wie nachfolgend noch erläutert wird.

Durch Verdrehen der Verriegelungshülse 33 in die Verriegelungsstellung in der vorstehend beschriebenen Weise werden die an der Mantelfläche 39 vorgesehenen Kugelaufnahmeöffnungen 41 der Verriegelungshülse 33 (Fig. 2 bis 6) in radiale Flucht zu den Verriegelungsabschnitten 91 des Schlossgehäuses 13 (Fig. 8 und 9) gebracht. Die in den Kugelaufnahmeöffnungen 41 vorgesehenen Verriegelungskugeln 43 (Fig. 2) werden hierdurch nach radial innen gedrängt, so dass ein Teil der jeweiligen Verriegelungskugel 43 in den Innenraum der Verriegelungshülse 33 bzw. der Klobenaufnahme 73 ragt. Die Verriegelungskugeln 43 greifen somit in die Ringnut 25 des in die Klobenaufnahme 37 eingeführten Klobens 33 ein (Fig. 1 und 2). Das erste Ende 21 der Schlaufe 17 ist hierdurch am Schlosskörper 11 verriegelt. Falls hingegen die Verriegelungshülse 33 in die Freigabestellung gedreht wird, gelangen die Kugelaufnahmeöffnungen 41 in Überdeckung mit den radial zurückversetzten Kugelausweichvertiefungen 93 des Schlossgehäuses 13 (Fig. 8 und 9) so dass die in den Kugelaufnahmeöffnungen 41 gehaltenen Verriegelungskugeln 43 nach radial außen zurückweichen können, um den Kloben 23 für eine Entnahme aus der Klobenaufnahme 73 freizugeben.

Eine Besonderheit des gezeigten Schlaufenschlosses liegt schließlich in dem Federring 57 (Fig. 2). Fig. 10 zeigt den Federring 57 in einer Perspektivansicht. Der Federring kann als ein kostengünstiges Stanz-Biege-Blechteil hergestellt werden, wobei die Vorspannzungen 59, die Fixierzungen 61 und die Rastzunge 63 durch einfache oder doppelte Umbiegung integral an dem Federring 57 ausgebildet sind. Auch die Montage gestaltet sich sehr einfach, da der geschlossene Federring 57 lediglich auf die Mantelfläche 39 der Verriegelungshülse 33 aufgesteckt wird. Der Federring 57 trägt zu einer erheblichen Verbesserung des Bedienungskomforts des Schlaufenschlosses bei, wie nachfolgend erläutert wird.

Mittels der radial äußeren Fixierzungen 61 wird der Federring 57 in dem Schlossgehäuse 13 drehfest gehalten. Hierfür greifen im montierten Zustand des Schlosses die Fixierzungen 61 in axialer Verlängerung zu den Kugelausweichvertiefungen 93 zwischen jeweils zwei benachbarte Fixieranschläge 95 des Schlossgehäuses 13 (Fig. 9). Der Federring 57 ist somit ortsfest angeordnet. Die bezüglich der Fixierzungen 61 nach radial innen versetzten Vorspannzungen 59 sind bezüglich der Hauptachse A (Fig. 2) länger ausgebildet als die Fixierzungen 61 (Fig. 10). Die Vorspannzungen 59 greifen somit in die Kugelausweichvertiefungen 93 des Schlossgehäuses 13 ein (Fig. 9). Hierdurch bewirken die Vorspannzungen 59 ein Vorspannen der Verriegelungskugeln 43 nach radial innen, wenn die Verriegelungshülse 33 in die Freigabestellung gedreht ist und der Kloben 23 sich in der Klobenaufnahme 73 des Schlosskörpers 11 befindet. Die Vorspannzungen 59 bewirken somit eine Rastverbindung zwischen den Verriegelungskugeln 43 und der Ringnut 25. Hierdurch wird ein unbeabsichtigtes Herausfallen des ersten Schlaufenendes 21 aus dem Schlosskörper 11 verhindert, wenn der Benutzer das Schlaufenschloss entriegelt und hierfür mit einer Hand den Schlosskörper 11 festhält und mit der anderen Hand den Schließzylinder 31 betätigt. Entsprechendes gilt für das Verriegeln des Schlaufenschlosses, wenn der Benutzer den Kloben 23 in die Klobenaufnahme 73 des Schlosskörpers 11 eingeführt hat und danach loslässt, um den Schließzylinder 31 zu betätigen.

Die an dem Federring 57 zusätzlich ausgebildete Rastzunge 63 (Fig. 10) und eine der Vorspannzungen 59 (Fig. 4) wirken abwechselnd mit der Rastvertiefung 45 zusammen, die an der Mantelfläche 39 der Verriegelungshülse 33 ausgebildet ist, um in der Verriegelungsstellung bzw. in der Freigabestellung der Verriegelungshülse 33 eine Rastverbindung zu bilden und die jeweilige Endstellung der Verriegelungshülse 33 hierdurch zu stabilisieren.

### Bezugszeichenliste

- 11: Schlosskörper
- 13: Schlossgehäuse
- 15: Schlüssel
- 17: Schlaufe
- 19: Kettenglied
- 21: erstes Ende der Schlaufe
- 23: Kloben
- 25: Ringnut
- 27: zweites Ende der Schlaufe
- 31: Schließzylinder
- 33: Verriegelungshülse
- 35: Zylindergehäuse
- 37: Zylinderkern
- 39: Mantelfläche
- 41: Kugelaufnahmeöffnung
- 43: Verriegelungskugel
- 45: Rastvertiefung
- 47: Bodenabschnitt
- 49: Lagerzapfen
- 51: Antriebsnocken des Zylinderkerns
- 53: Umlenkelement
- 55: Mitnehmernocken der Verriegelungshülse
- 57: Federring
- 59: Vorspannzunge
- 61: Fixierzunge
- 63: Rastzunge
- 65: Innengehäuse
- 67: Sicherungsbolzen
- 69: Anschlussteil
- 71: Befestigungsabschnitt des Schlossgehäuses
- 73: Klobenaufnahme
- 75: Sicherungsbund
- 77: Klammerabschnitt des Zylindergehäuses
- 79: Lagersteg des Zylindergehäuses
- 81: Lagernut des Umlenkelements
- 83: erste Führungsnut des Umlenkelements
- 85: zweite Führungsnut des Umlenkelements
- 87: Lagerfläche des Zylindergehäuses
- 89: Lageröffnung des Zylindergehäuses
- 91: Verriegelungsabschnitt des Schlossgehäuses
- 93: Kugelausweichvertiefung des Schlossgehäuses
- 95: Fixieranschlag
- A: Hauptachse
- B: Zylinderachse

## Patentansprüche

1. Schlaufenschloss, insbesondere Ketten- oder Drahtseilschloss, mit einem Schlosskörper (11) und einer Schlaufe (17),
wobei der Schlosskörper eine Klobenaufnahme (73) mit einer Verriegelungshülse (33) aufweist, die um eine Hauptachse (A) des Schlosskörpers zwischen einer Verriegelungsstellung und einer Freigabestellung drehbar ist und die mehrere umfänglich verteilt angeordnete Kugelaufnahmeöffnungen (41) aufweist, in denen eine jeweilige Verriegelungskugel (43) gelagert ist, wobei die Verriegelungskugeln in der Verriegelungsstellung nach radial innen gedrängt und in der Freigabestellung nach radial außen freigegeben sind,
wobei die Schlaufe an einem ersten Ende (21) einen Kloben (23) aufweist, der koaxial zu der Hauptachse (A) des Schlosskörpers in die Klobenaufnahme des Schlosskörpers einführbar ist und dort mittels der Verriegelungskugeln verriegelbar ist, wobei ein zweites Ende (27) der Schlaufe an einem Befestigungsabschnitt (71) des Schlosskörpers dauerhaft befestigt ist und im Wesentlichen koaxial zu der Hauptachse (A) ausgerichtet ist,
wobei der Schlosskörper ferner einen Schließzylinder (31) aufweist, der entlang der Hauptachse (A) des Schlosskörpers zwischen der Klobenaufnahme (73) und dem Befestigungsabschnitt (71) angeordnet ist, wobei der Schließzylinder einen Zylinderkern (37) aufweist, der um eine Zylinderachse (B) drehbar ist, welche senkrecht zu der Hauptachse (A) ausgerichtet ist,
**dadurch gekennzeichnet,**
**dass** zwischen dem Zylinderkern (37) und der Verriegelungshülse (33) eine Umlenkeinrichtung wirksam ist, die eine Drehbewegung des Zylinderkerns in eine Drehbewegung der Verriegelungshülse umlenkt.

2. Schlaufenschloss nach Anspruch 1,
wobei die Umlenkeinrichtung ein Umlenkelement (53) aufweist, das einen Mitnehmerabschnitt aufweist, der mit einem Antriebsabschnitt (51) des Zylinderkerns (37) zusammenwirkt, wobei das Umlenkelement einen Abtriebsabschnitt aufweist, der mit einem Mitnehmerabschnitt (55) der Verriegelungshülse (33) zusammenwirkt.

3. Schlaufenschloss nach Anspruch 2,
wobei das Umlenkelement (53) in einer Normalebene zu der Zylinderachse (B) beweglich gelagert ist.

4. Schlaufenschloss nach Anspruch 2 oder 3,
wobei der Mitnehmerabschnitt des Umlenkelements (53) eine erste Führungsnut (83) aufweist, in die der Antriebsabschnitt (51) des Zylinderkerns eingreift, und wobei der Abtriebsabschnitt des Umlenkelements eine zweite Führungsnut (85) aufweist, in die der Mitnehmerabschnitt (55) der Verriegelungshülse eingreift.

5. Schlaufenschloss nach Anspruch 4,
wobei das Umlenkelement (53) linear beweglich gelagert ist, wobei die erste Führungsnut (83) und die zweite Führungsnut (85) senkrecht zueinander verlaufen.

6. Schlaufenschloss nach einem der vorhergehenden Ansprüche, wobei die Verriegelungshülse (33) becherförmig ausgebildet ist mit einem Bodenabschnitt (47), an dem eine koaxial zu der Hauptachse (A) des Schlosskörpers ausgerichtete erste Lagereinrichtung ausgebildet ist, wobei die erste Lagereinrichtung mit einer zweiten Lagereinrichtung zusammenwirkt, die an einem Zylindergehäuse (35) des Schließzylinders (31) ausgebildet ist, wobei die erste Lagereinrichtung eine Lageröffnung (89) und die zweite Lagereinrichtung einen in die Lageröffnung eingreifenden Lagerzapfen (49) aufweisen oder umgekehrt.

7. Schlaufenschloss nach einem der vorhergehenden Ansprüche,
wobei der Schlosskörper (11) ein Schlossgehäuse (13) aufweist, an dessen Innenseite Kugelausweichvertiefungen (93) ausgebildet sind, die den Kugelaufnahmeöffnungen (41) der Verriegelungshülse (33) zugeordnet sind und in die die Verriegelungskugeln (41) nach radial außen zurückweichen können, wenn die Verriegelungshülse in die Freigabestellung gedreht ist.

8. Schlaufenschloss nach einem der vorhergehenden Ansprüche,
wobei ein Federring (57) vorgesehen ist, der die Verriegelungshülse (33) umfänglich umgibt und der mehrere rückfedernde Vorspannzungen (59) aufweist, die zumindest in der Freigabestellung der Verriegelungshülse die Kugelaufnahmeöffnungen (41) der Verriegelungshülse überdecken und hierdurch die Verriegelungskugeln (43) nach radial innen vorspannen.

9. Schlaufenschloss nach Anspruch 8,
wobei der Federring (57) wenigstens eine Fixierzunge (61) aufweist, die den Federring innerhalb des Schlosskörpers (11) in einer drehfesten Anordnung fixiert, wobei die Vorspannzungen (59) und die wenigstens eine Fixierzunge (61) bezüglich der Hauptachse (A) des Schlosskörpers vorzugsweise radial versetzt zueinander angeordnet sind.

10. Schlaufenschloss nach Anspruch 8 oder 9,
wobei der Federring (57) innerhalb des Schlosskörpers (11) drehfest angeordnet ist, wobei der Federring wenigstens eine rückfedernde Rastzunge (63) aufweist, die mit wenigstens einer Rastvertiefung (45) der Verriegelungshülse (33) eine Rastverbindung bildet, wenn die Verriegelungshülse sich in der Verriegelungsstellung und/oder in der Freigabestellung befindet.

11. Schlaufenschloss nach einem der vorhergehenden Ansprüche,
wobei der Schlosskörper (11) ein einteiliges Schlossgehäuse (13) aufweist, in dem die Verriegelungshülse (33) bezüglich der Hauptachse (A) des Schlosskörpers in axialer Richtung gesichert ist und an dem der Befestigungsabschnitt (71) des Schlosskörpers ausgebildet ist.

## Claims

1. A loop lock, in particular a chain lock or a wire cable lock, having a lock body (11) and a loop (17),
wherein the lock body has a block receiver (73) having a locking sleeve (33) which is rotatable about a main axis (A) of the lock body between a locked position and a release position and which has a plurality of ball receiving openings (41) which are arranged peripherally distributed and in each of which a respective locking ball (43) is supported, with the locking balls being urged radially inwardly in the locked position and being released radially outwardly in the release position;
wherein the loop has a block (23) at a first end (21), which can be introduced into the block receiver of the lock body coaxially to the main axis (A) of the lock body and can be locked there by means of the locking balls, with a second end (27) of the loop being permanently fastened to a fastening section (71) of the lock body and being substantially coaxially aligned with the main axis (A); and wherein the lock body furthermore has a lock cylinder (31) which is arranged along the main axis (A) of the lock body between the block receiver (73) and the fastening section (71); with the lock cylinder having a cylinder core (37) which is rotatable about a cylinder axis (B) which is aligned perpendicular to the main axis (A),
**characterized in that**
a deflection device which deflects a rotational movement of the cylinder core into a rotational movement of the locking sleeve is effective between the cylinder core (37) and the locking sleeve (33).

2. A loop lock in accordance with claim 1,
wherein the deflection device has a deflection element (53) which has an entrainer section which cooperates with a drive section (51) of the cylinder core (37), with the deflection element having a drive section which cooperates with an entrainer section (55) of the locking sleeve (33).

3. A loop lock in accordance with claim 2,
wherein the deflection element (53) is movably supported with respect to the cylinder axis (B) in a normal plane.

4. A loop lock in accordance with claim 2 or claim 3,
wherein the entrainer section of the deflection element (53) has a first guide groove (83) into which the drive section (51) of the cylinder core engages, with the drive section of the deflection element having a second guide groove (85) into which the entrainer section (55) of the locking sleeve engages.

5. A loop lock in accordance with claim 4,
wherein the deflection element (53) is supported in a linearly movable manner; and wherein the first guide groove (83) and the second guide groove (85) extend perpendicular to one another.

6. A loop lock in accordance with any one of the preceding claims,
wherein the locking sleeve (33) is formed in the shape of a cup and has a base section (47) at which a first support device is configured which is aligned coaxially to the main axis (A) of the lock body, with the first support device cooperating with a second support device which is configured at a cylinder housing (35) of the lock cylinder (31), and with the first support device having a support opening (89) and the second support device having a support spigot (49) which engages into the support opening or vice versa.

7. A loop lock in accordance with any one of the preceding claims,
wherein the lock body (11) has a lock housing (13) at whose inner side ball receiving recesses (93) are formed which are associated with the ball receiving openings (41) of the locking sleeve (33) and into which the locking balls (41) can move back radially outwardly when the locking sleeve is rotated into the release position.

8. A loop lock in accordance with any one of the preceding claims,
wherein a spring ring (57) is provided which peripherally surrounds the locking sleeve (33) and which has a plurality of resilient preload tongues (59) which at least cover the ball receiving openings (41) of the locking sleeve in the release position of the locking sleeve and which hereby preload the locking balls (43) radially inwardly.

9. A loop lock in accordance with claim 8,
wherein the spring ring (57) has at least one fixing tongue (61) which fixes the spring ring within the lock body (11) in a rotationally fixed arrangement; and wherein the preload tongues (59) and the at least one fixing tongue (61) are preferably arranged radially offset to one another with respect to the main axis (A) of the lock body.

10. A loop lock in accordance with claim 8 or claim 9,
wherein the spring ring (57) is rotationally fixedly arranged within the lock body (11), with the spring ring having at least one resilient latching tongue (63) which forms a latching connection with at least one latch recess (45) of the locking sleeve (33) when the locking sleeve is located in the locked position and/or in the release position.

11. A loop lock in accordance with any one of the preceding claims,
wherein the lock body (11) has a single-part lock housing (13) in which the locking sleeve (33) is secured in an axial direction with respect to the main axis (A) of the lock body and at which the fastening section (71) of the lock body is configured.

## Revendications

1. Cadenas à boucle, en particulier cadenas à chaîne ou cadenas à câble, comprenant un corps de cadenas (11) et une boucle (17), dans lequel le corps de cadenas comprend un récepteur pour tenon (73) avec une douille de verrouillage (33) qui est capable de rotation autour d'un axe principal (A) du corps de cadenas entre une position de verrouillage et une position de libération et qui comporte plusieurs ouvertures de réception de billes (41) agencées de façon répartie sur la périphérie, ouvertures dans lesquelles est logée une bille de verrouillage respective (43), les billes de verrouillage étant forcées radialement vers l'intérieur dans la position de verrouillage et libérées radialement vers l'extérieur dans la position de libération,
dans lequel la boucle comprend à une première extrémité (21) un tenon (23) qui est susceptible d'être introduit coaxialement à l'axe principal (A) du corps de cadenas dans le récepteur pour tenon du corps de cadenas et qui est susceptible d'être verrouillé dans celui-ci au moyen des billes de verrouillage, dans lequel une seconde extrémité (27) de la boucle est fixée de façon permanente sur une portion de fixation (71) du corps de cadenas et est orientée sensiblement coaxialement à l'axe principal (A),
dans lequel le corps de cadenas comprend en outre un cylindre de fermeture (31) qui est agencé le long de l'axe principal (A) du corps de cadenas entre le récepteur pour tenon (73) et la portion de fixation (71), le cylindre de fermeture comprenant un noyau de cylindre (37) susceptible de rotation autour d'un axe de cylindre (B) qui est orienté perpendiculairement à l'axe principal (A),
**caractérisé en ce que**
un dispositif de renvoi agit entre le noyau de cylindre (37) et la douille de verrouillage (33), qui renvoie un mouvement de rotation du noyau de cylindre en un mouvement de rotation de la douille de verrouillage.

2. Cadenas à boucle selon la revendication 1,
dans lequel le dispositif de renvoi comprend un élément de renvoi (53) qui comprend une portion d'entraînement qui coopère avec un tronçon d'entraînement (51) du noyau de cylindre (37), ledit élément de renvoi comprenant une portion menée qui coopère avec une portion d'entraînement (55) de la douille de verrouillage (33).

3. Cadenas à boucle selon la revendication 2,
dans lequel l'élément de renvoi (53) est monté mobile dans un plan normal par rapport à l'axe de cylindre (B).

4. Cadenas à boucle selon la revendication 2 ou 3,
dans lequel la portion d'entraînement de l'élément de renvoi (53) comporte une première gorge de guidage (83) dans laquelle s'engage le tronçon d'entraînement (51) du noyau de cylindre, et dans lequel la portion menée de l'élément de renvoi comporte une seconde gorge de guidage (85) dans laquelle s'engage le tronçon d'entraînement (55) de la douille de verrouillage.

5. Cadenas à boucle selon la revendication 4,
dans lequel l'élément de renvoi (53) est monté en déplacement linéaire, et la première gorge de guidage (83) et la seconde gorge de guidage (85) s'étendent perpendiculairement l'une à l'autre.

6. Cadenas à boucle selon l'une des revendications précédentes,
dans lequel la douille de verrouillage (33) est réalisée en forme de godet avec une portion de fond (47) sur laquelle est réalisé un premier dispositif formant palier orienté coaxialement à l'axe principal (A) du corps de cadenas, ledit premier dispositif formant palier coopérant avec un second dispositif formant palier qui est réalisé sur un boîtier cylindrique (35) du cylindre de fermeture (31), et le premier dispositif formant palier comporte une ouverture de palier (89) et le second dispositif formant palier comporte un tenon de palier (49) engagé dans l'ouverture de palier, ou inversement.

7. Cadenas à boucle selon l'une des revendications précédentes,
dans lequel le corps de cadenas (11) comprend un boîtier de cadenas (13), à la face intérieure duquel sont réalisés des renfoncements de dégagement de billes (93), qui sont associés aux ouvertures de réception de billes (41) de la douille de verrouillage (33) et dans lesquels les billes de verrouillage (41) peuvent se dégager radialement vers l'extérieur quand la douille de verrouillage est tournée jusque dans la position de libération.

8. Cadenas à boucle selon l'une des revendications précédentes, dans lequel il est prévu une bague ressort (57) qui entoure la douille de verrouillage (33) sur sa périphérie et qui comporte plusieurs languettes de précontrainte (59) à retour élastique, qui recouvrent les ouvertures de réception de billes (41) de la douille de verrouillage, au moins dans la position de libération de la douille de verrouillage, et assurent grâce à cela une précontrainte des billes de verrouillage (43) radialement vers l'intérieur.

9. Cadenas à boucle selon la revendication 8,
dans lequel la bague ressort (57) comprend au moins une languette de fixation (61) qui fixe la bague ressort à l'intérieur du corps de cadenas (11) dans un agencement solidaire en rotation, et les languettes de précontrainte (59) et ladite au moins une languette de fixation (61) sont agencées de préférence de façon décalée radialement les unes par rapport aux autres par rapport à l'axe principal (A) du corps de cadenas.

10. Cadenas à boucle selon la revendication 8 ou 9,
dans lequel la bague ressort (57) est agencée solidaire en rotation à l'intérieur du corps de cadenas (11) et la bague ressort comprend au moins une languette d'enclenchement (63) à retour élastique, qui forme, avec au moins un renfoncement d'enclenchement (33), une liaison à enclenchement quand la douille de verrouillage se trouve dans la position de verrouillage et/ou dans la position de libération.

11. Cadenas à boucle selon l'une des revendications précédentes,
dans lequel le corps de cadenas (11) comprend un boîtier de cadenas (13) d'un seul tenant, dans lequel la douille de verrouillage (33) est bloquée en direction axiale par rapport à l'axe principal (A) du corps de cadenas et sur lequel est réalisée la portion de fixation (71) du corps de cadenas.
